(19) Europäisches Patentamt
European Patent Office
Office européen des brevets

(11) **EP 2 883 792 B1**

(12) **EUROPÄISCHE PATENTSCHRIFT**

(45) Veröffentlichungstag und Bekanntmachung des Hinweises auf die Patenterteilung:
**22.06.2016 Patentblatt 2016/25**

(51) Int Cl.:
***B64C 39/08*** *(2006.01)*

(21) Anmeldenummer: **14004141.9**

(22) Anmeldetag: **09.12.2014**

(54) **Flugzeugkonfiguration**

Aircraft configuration

Configuration d'avion

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2013 DE 102013020601**

(43) Veröffentlichungstag der Anmeldung:
**17.06.2015 Patentblatt 2015/25**

(73) Patentinhaber: **Airbus Defence and Space GmbH**
**85521 Ottobrunn (DE)**

(72) Erfinder:
• **Stückl, Stefan**
**80798 München (DE)**
• **van Toor, Jan**
**81739 München (DE)**

(74) Vertreter: **Schäfer, Matthias W.**
**Patentanwalt**
**Schwanseestrasse 43**
**81549 München (DE)**

(56) Entgegenhaltungen:
FR-A- 510 306          FR-A- 682 950
US-A1- 2006 151 666    US-A1- 2008 001 025
US-A1- 2011 180 660    US-A1- 2013 264 428

EP 2 883 792 B1

**Beschreibung**

Die Erfindung betrifft ein Flugzeug, insbesondere ein Passagier- oder Frachtflugzeug, mit einem einzelnen Rumpf.

Für derartige Flugzeuge sind aus dem Stand der Technik verschiedenste Flugzeugkonfigurationen bekannt. Dabei ist für heutige Passagierflugzeuge die Drachenkonfiguration, d.h. ein Rumpf mit einem Hauptflügel und einem kleinen Höhenleitwerk am Heck, die verbreitetste Variante. Hier wird durch die Fläche des Hauptflügels bzw. der Tragfläche der Auftrieb für das gesamte Flugzeug erzeugt, das Höhenleitwerk dient lediglich zur Stabilisierung, d.h. es erzeugt in der Regel einen Abtrieb. Der Neutralpunkt des Flugzeugs liegt dabei hinter dem Flugzeugschwerpunkt, wodurch eine flugmechanisch stabile Fluglage gewährleistet wird.

Auch ist bekannt, dass die aerodynamische Güte eines Luftfahrzeugs wesentlichen Einfluss auf dessen Treibstoffverbrauch und dessen Reichweite hat. Dabei spielt der induzierte Widerstand eine wichtige Rolle für die Aerodynamik. Die wichtigsten Einflussfaktoren auf den induzierten Widerstand ($C_{d,i}$) eines Flugzeugs sind im Wesentlichen die Auftriebsverteilung am Flügel (e) und dessen Streckung (AR), wie aus der allgemein bekannten quadratischen Näherung ersichtlich wird (Gl.1):

$$C_{d,i} = \frac{1}{\pi A \, \mathrm{Re}} C_l^2$$

Eine elliptische Auftriebsverteilung stellt dabei das theoretische Optimum dar, das mit gewissen Einschränkungen bei heutigen Flugzeugen auch annähernd erreicht wird (e ≈ 0.8). Der Streckung des Flügels sind hingegen durch strukturelle Aspekte, insbesondere das auftretende Biegemoment an der Flügelwurzel, und Spannweitenlimitierungen, insbesondere durch Vorgaben der Flughafenbetreiber, natürliche Grenzen gesetzt. Die dimensionslose Flügelstreckung (AR) liegt daher typischerweise etwa bei 8 - 12.

Die US 2013/0264428 A1 offenbart ein Verfahren zum Koppeln eines ersten Rumpfes eines Antriebsmoduls eines Flugzeugs mit einem zweiten Rumpf eines Transportmoduls und ein modulares Flugzeug, welches dieses Verfahren implementiert. Dabei zeigt das Antriebsmodul eine Boxwing-Flügelkonfiguration mit einem vorderen, nach hinten gepfeilten Flügel und einem hinteren in V-Anordnung angebrachten nach vorne gepfeilten Flügel, wobei die beiden Flügel an den mit Winglets besetzten Flügelspitzen direkt untereinander verbunden sind. Das Antriebsmodul ist gemäß US 2013/0264428 A1 mit zwei Strahlantrieben ausgestattet, die jeweils links und rechts vom Rumpf auf dem hinteren Flügel angeordnet sind. Das im hinteren Rumpf des Antriebsmodul angeordnete Cockpit erlaubt nur eine sehr eingeschränkte Sicht des Piloten und erschwert durch die kurz vor dem Cockpit angeordnete vordere Tragfläche einen Landeanflug auf Sicht.

Die US 2006/151666 A1 offenbart ein VTOL Flugzeug mit verteiltem Schub und eine Regelung hierfür. Dabei ist eine Tandemflügelanordnung offenbart, mit zumindest einem vorderen Pfeilflügel und einer Streckung kleiner 10. Vier Flugantriebe für den Vorwärtsflug sind an vertikalen Finnen angeordnet, die sich an den Flügelspitzen der hinteren Tragfläche befinden.

Die US 2008/0001025 A1 offenbart ein ferngesteuert startend und landendes, unbemanntes Amphibienflugzeug mit Tandemflügeln, wobei diese durch zwei Schwimmer-Rümpfe verbunden sind. Das Flugzeug wird durch zwei hintereinander angeordnete Flugantriebe angetrieben, wobei ein erster Flugantrieb auf der vorderen Tragfläche und ein zweiter Flugantrieb auf der hinteren Tragfläche angeordnet ist. Die als Rechteckflügel ausgebildeten Tragflächen haben eine Streckung von ca. 9.

Die US 2011/0180660 A1 offenbart ein Flugzeug mit einem Einzelrumpf und einer Boxwing-Flügelkonfiguration mit einem vorderen, nach hinten gepfeilten Flügel mit deutlich größerer Spannweite als der hintere in V-Anordnung angebrachten nach vorne gepfeilten Flügel, wobei der hintere Flügel über die mit Winglets besetzten Flügelspitzen direkt mit dem vorderen Flügel verbunden ist. Dabei weist zumindest der hintere der beiden Pfeilflügel, auf dem die beiden Flugantriebe angebracht sind, eine Streckung von ca. 6,5 auf.

Die FR 510306 aus dem Jahr 1920 offenbart ein Flugzeug für lange Flugreisen. Dabei sind drei Doppeldecker-Flügelanordnungen, d.h. sechs Tragflächen, hintereinander an einem Rumpf angeordnet. Auf dem hinteren Flügelpaar sind dabei zwei Flugantriebe angedeutet. Die Tragflächen sind dabei als Rechteckflügel ausgebildet, wobei die Streckung der Flügelpaare jeweils zwischen ca. 3,8 und ca. 6,5 beträgt.

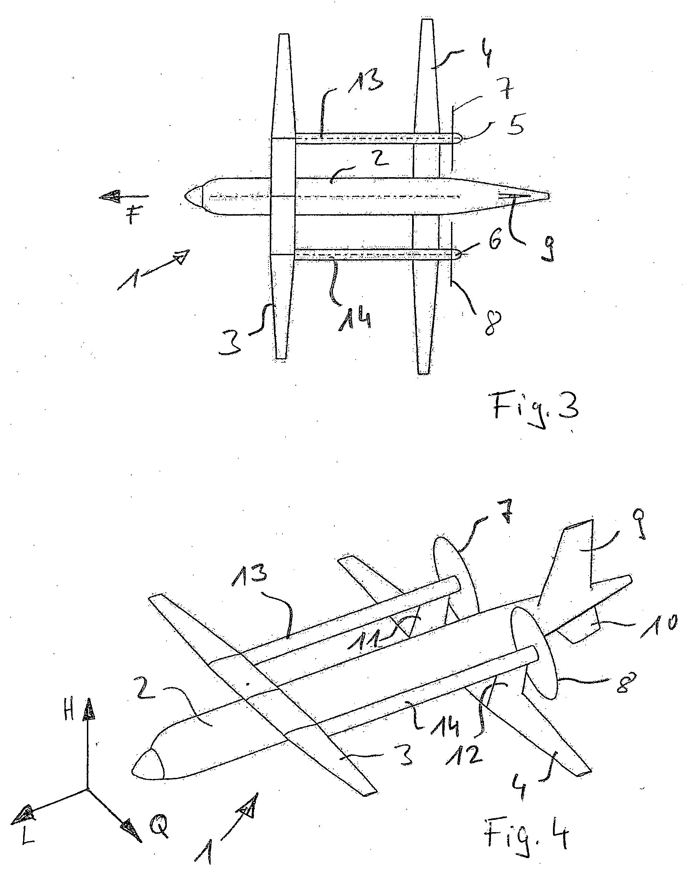

Die FR 682950 aus dem Jahr 1929 offenbart ein Wasserflugzeug mit großer Leistung und gestaffelten Tragflächen. Dabei zeigt Figur 4 ein Doppelrumpfflugzeug mit drei hintereinander angeordneten Tragflächenanordnungen, nämlich einer Doppeldeckeranordnung, einer Einflächenanordnung und einer weiteren Doppeldeckeranordnung, wobei auf letzterer vier Flugantriebe angeordnet sind. Dabei sind die Tragflächen als Rechteckflügel mit einer Streckung von ca. 5 bis ca. 7 ausgebildet.

Der Erfindung liegt daher die Aufgabe zugrunde, die Nachteile der bekannten Lösungen des Standes der Technik zu vermeiden und eine verbesserte Flugzeugkonfiguration mit verbesserter Aerodynamik, nämlich deutlich reduziertem induzierten Widerstand zur Verfügung zu stellen. Außerdem soll durch die Erfindung ein Ressourcen schonendes und umweltfreundliches Flugzeugkonzept geschaffen werden, was die Akzeptanz derartiger Flugzeuge bei der Bevölkerung steigert.

Diese Aufgabe wird erfindungsgemäß durch ein Flugzeug mit den Merkmalen des Patentanspruchs 1 gelöst. Vorteilhafte Ausgestaltungen und Weiterbildungen der Erfindung sind in den abhängigen Ansprüchen angegeben.

Bei dem erfindungsgemäßen Flugzeug ist eine Tandem-Flügel-Konfiguration vorgesehen, bei der die benötigte Flügelfläche auf zwei separate Flügel verteilt wird. Stellen strukturelle Aspekte keine Limitierung dar, kann bei gleicher Spannweite die Streckung der einzelnen Flügel dadurch gegenüber einer konventionellen Drachenkonfiguration verdoppelt werden, was nach Gleichung 1 eine Halbierung des induzierten Widerstands nach sich zieht. Außerdem erfolgt die Antriebsintegration am hinteren Flügel, was weitere Vorteile mit sich bringt.

Zwar sind aus dem Stand der Technik auch Tandemflügel-Projekte bekannt, die im Bereich der kommerziellen Luftfahrt mit Doppelrumpfkonfigurationen einhergehen, wie dies beispielsweise aus der US 4,165,058 bzw. aus der US 2010/0044521 A1 hervorgeht. Diese unterscheiden sich jedoch in vielfacher Hinsicht von der vorliegenden Erfindung.

Bei der US 4,165,058 sind zwei Rechteckflügel hintereinander derart angeordnet, dass der vordere Flügel an der Rumpfunterseite, quasi in der Art eines Tiefdeckers, und der hintere Flügel auf den an der Rumpfoberseite angeordneten Seitenrudern, quasi in der Art eines Hochdeckers, befestigt sind. Die Spannweite der beiden Rechteckflügel ist dabei gleich groß. Die Flugantriebe sitzen dabei hinter dem vorderen Flügel, entweder an der dem jeweilig anderen Rumpf zugewandten Seite der Rumpfröhre oder aber am Heck im Seitenleitwerk oder unter der hinteren Tragfläche.

Bei der US 2010/0044521 A1 sind zwei unabhängige Rumpfröhren über vorwärts gepfeilte Tandemflügel verbunden. Dabei weist der an der Rumpfunterseite angebrachte vordere Flügel eine größere Spannweite als der an der Rumpfoberseite angebrachte hintere Flügel auf. Der Antrieb soll dabei durch am hinteren Flügel zwischen den beiden Rümpfen angebrachten Flugantrieben erfolgen.

Allerdings ist bei diesen Doppelrumpf-Konfigurationen die erschwerte Bedienbarkeit im Flug und am Boden nachteilig. So haben die Piloten nur eingeschränkte Sicht und können das Flugzeug auch auf dem Rollfeld nur schwer manövrieren. Außerdem sind heutige Flughafenterminals nicht für das Be- und Entladen von Doppelrumpfflugzeugen geeignet.

Ein erfindungsgemäßes Flugzeug, insbesondere Passagier- oder Frachtflugzeug, mit einem Rumpf, weist eine Tandemflügelanordnung auf und zumindest zwei auf der Oberseite der hinteren Tragfläche angeordnete Flugantriebe. Durch die Erfindungsgemäße Konfiguration der Tragflächen als zwei separaten Trapezflügel mit je einer Streckung im Bereich von größer oder gleich 12 und kleiner oder gleich 25 kann eine Halbierung des induzierten Widerstands und eine Verringerung des Biegemoments an der Flügelwurzel erfolgen, wodurch der strukturellen Limitierung der der Flügelstreckung entgegengewirkt wird. Ein weiterer positiver Effekt der erfindungsgemäßen Konfiguration ist, dass beide Flügel die Funktion eines Höhenleitwerks übernehmen. Dadurch kann der Widerstand und das Gewicht des Höhenleitwerks eingespart werden und der dort üblicherweise erzeugte Abtrieb vermieden werden. An den Tragflächen wird die laminare Anströmung nicht von Propellern oder einem Triebwerksstrahl gestört, so dass durch entsprechende Profilierung oder andere technische Mittel eine laminare Strömung mit geringem Reibungswiderstand realisiert werden kann.

Eine vorteilhafte Weiterbildung der Erfindung sieht vor, dass die beiden Tragflächen der Tandemflügelanordnung in Hochachsenrichtung vertikal beabstandet sind. Hierdurch wird die Anströmung der in Flugrichtung hinteren Tragfläche verbessert.

Eine weitere vorteilhafte Weiterbildung der Erfindung sieht vor, dass die vordere Tragfläche an der Rumpfoberseite befestigt ist, während die hintere Tragfläche an der Rumpfunterseite befestigt ist. Hierdurch erfährt der hintere Flügel eine optimale Anströmung, da die abströmende Luft der vorderen Tragfläche leicht abwärtsgerichtet von der Flügelhinterkante abströmt.

Eine vorteilhafte Weiterbildung der Erfindung sieht vor, dass die hintere Tragfläche eine größere Spannweite als die vordere Tragfläche aufweist. Hierdurch lassen sich die Flugantriebe leichter auf der hinteren Tragfläche integrieren.

Eine vorteilhafte Weiterbildung der Erfindung sieht vor, dass die Auftriebsverteilung zwischen dem Auftrieb der vorderen Tragfläche und dem Auftrieb der hinteren Tragfläche etwa 45:55, vorzugsweise 50:50 beträgt.

Eine vorteilhafte Weiterbildung der Erfindung sieht vor, dass die zumindest zwei Flugantriebe auf Pylonen auf der Tragflächenoberseite der in Flugrichtung hinteren Tragfläche angeordnet sind. Als Antriebseinheiten können dabei konventionelle Verbrennungsantriebe mit Kraftstoff und Propelleranlage oder Hybridantriebe mit zusätzlichem elektrischen Antrieb, Generator und Batterie oder ein rein elektrischer Antrieb vorgesehen sein. Eine derartige Antriebsanordnung auf der Oberseite der Tragfläche reduziert die Lärmabstrahlung nach unten, was die Umweltverträglichkeit der erfindungsgemäßen Flugzeugkonfiguration deutlich erhöht. Dabei können die Pylonen im Querschnitt die Form eines symmetrischen Strömungsprfils aufweisen und dadurch zusätzliche Stabilisierungsflächen bilden.

Noch eine vorteilhafte Weiterbildung der Erfindung sieht vor, dass am Heck des Flugzeugrumpfes ein weiterer Flugantrieb vorgesehen ist. Eine weitere Propelleranlage kann optional am Rumpfheck installiert sein, um den Effekt der Grenzschichtbeschleunigung auch durch Beschleunigung der Rumpf-Grenzschicht zu erzielen. Dabei kann hier aufgrund seines geringen Platzbedarfs vorteilhafterweise ein Elektroantrieb zum Einsatz kommen, der sich in den Heckkonus der Rumpfkontur einfach integrieren lässt.

Außerdem sieht eine vorteilhafte Weiterbildung der Erfindung vor, dass als Flugantrieb ein Propellerantrieb vorgesehen ist, der beispielsweise Schubpropeller aufweisen kann. Die Propeller können vorteilhafterweise als Schubpropeller, d.h. so genannte Pusher-Propeller am Ende des Antriebsstrangs angebracht sein. Dadurch besteht die Möglichkeit die Antriebseffizienz durch Grenzschicht-Beschleunigung an den Tragflächen zu erhöhen.

Eine andere vorteilhafte Weiterbildung der Erfindung sieht vor, dass sich zwischen den beiden Tragflächen erstreckende Gehäuseröhren vorgesehen sind. Beide Flügel bzw. Tragflächen können dabei mit zwei im Wesentlichen zylindrischen parallel zum Rumpf und zur Flugzeuglängsachse angeordneten Gehäuseröhren verbunden sein, in denen sich konventionelle, hybrid-elektrische oder voll-elektrische Antriebseinheiten befinden. Hierdruch wird das Biegemoment an der Flügelwurzel verringert, wodurch die Flügeltragstruktur leichter ausgebildet werden kann. Dabei können die Gehäuseröhren an der Unterseite der vorderen Tragfläche und über die Pylonen mit der hinteren Tragfläche verbunden sein. Die Gehäuseröhren können dabei vorteilhafterweise so gestaltet sein, dass aufgrund ihrer guten Zugänglichkeit am Boden beispielsweise Batterien von unten schnell und einfach mit einem Hebemechanismus entfernt und ausgetauscht werden können. Dabei können die Gehäuseröhren auch dadurch gebildet werden, dass bereits zylinderröhrenförmige Batterie- oder Akkuelemente an einer Tragstruktur, beispielsweise einem Tragprofil, das sich zwichen dem vorderen Flügel und dem hinteren Flügel erstreckt, arretiert werden. So kann die Gehäuseröhre aus vielen derartigen Akkuelementen gebildet werden, die sich hintereinander an dem Tragprofil aufreihen. Ferner bietet die Anordnung des Kraftstoffs bzw. der Batterien außerhalb des Rumpfes mit Passagierkabine zusätzliche Sicherheit für die Passagiere im Falle eines Brandes oder einer Notlandung.

Noch eine weitere vorteilhafte Weiterbildung der Erfindung sieht vor, dass das Flugzeug mit einer instabilen Neutralpunktlage ausgelegt ist, um ein störendes Abtriebselement wie bei konventionellen Flugzeugen das Höhenruder, zu vermeiden und eine näherungsweise gleichmäßige Flächen- und Auftriebsverteilung zwischen beiden Flügeln zu erreichen. Eine automatische Flugregelungseinrichtung ist hierbei, beispielsweise in Form einer Regelungssoftware zum Ansteuern entsprechender Aktuatoren, vorgesehen, um das Flugzeug mit einer künstlichen Stabilität zu versehen. Dabei dienen die Aktuatoren zum Betätigen von Steuerflächen wie Klappen und Rudern. Derartige Flugzeugregelungen für flugmechanisch instabile Konfigurationen sind bereits aus der militärischen Luftfahrt bekannt. Schließlich kann das Flugzeug vorteilhafterweise als bemanntes Passagier- oder Frachtflugzeug ausgebildet sein.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigen:

Figur 1 eine schematische Draufsicht auf eine erste erfindungsgemäße Ausführungsform einer Flugzeugkonfiguration;

Figur 2 eine Schnittansicht entlang der Schnittlinie II - II aus Figur 1;

Figur 3 eine schematische Draufsicht auf eine zweite erfindungsgemäße Ausführungsform einer Flugzeugkonfiguration;

Figur 4 eine isometrische Ansicht der Flugzeugkonfiguration aus Figur 3;

Figur 5 eine Draufsicht auf eine dritte erfindungsgemäße Ausführungsform einer Flugzeugkonfiguration.

Bei den abgebildeten Figuren sind gleiche oder ähnliche Bauteile mit gleichen Bezugszeichen gekennzeichnet. Richtungsangaben beziehen sich soweit nicht anders angegeben auf die Achsen des Flugzeugs, nämlich Längsachse L, Querachse Q und Hochachse H.

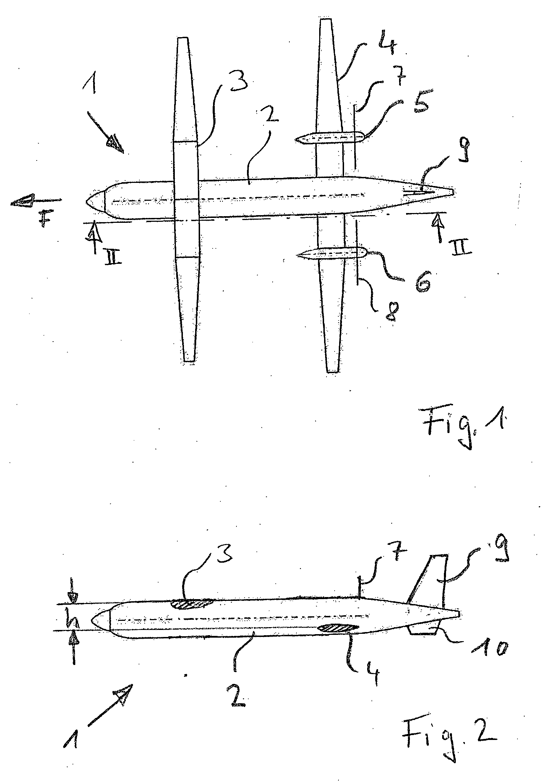

Figur 1 und 2 zeigen eine erste erfindungsgemäße Ausführungsform einer Konfiguration eines Flugzeugs 1 mit einem länglichen röhrenförmigen Rumpf 2, mit einer vorderen Tragfläche 3 und einer hinteren Tragfläche 4. Ferner sind auf der hinteren Tragfläche 4 zwei Flugantriebe 5, 6 jeweils links und rechts vom Rumpf 2 angebracht. Die Flugantriebe sind mit Schubpropellern 7,8 versehen. Ferner ist am Heck des Flugzeugs 1 ein Seitenleitwerk 9 und eine Finne 10 angeordnet.

Die vordere Tragfläche 3 weist dabei eine kleinere Spannweite auf als die hintere Tragfläche 4. Die Streckung der vorderen Tragfläche 3 beträgt im vorliegenden Ausführungsbeispiel 16, während die Streckung der hinteren Tragfläche 18 beträgt. Das Auftriebsverhältnis von vorderer zu hinterer Tragfläche 4 beträgt etwa 45:55. Durch die hohe Streckung ist die Flügeltiefe im Vergleich zu konventionellen Verkehrsflugzeugen gering. Die Flügelstruktur kann leichter ausgelegt werden.

Ferner kann ein ungepfeilter Mehrfachtrapezflügel verwendet werden, wie in den beigefügten Figuren beispielhaft gezeigt. Dabei kann jede einzelne Tragfläche 3, 4 nicht gezeigte Steuerelemente, wie Höhenruder, Querruder und Landeklappen aufweisen. Die Flügel selbst können aus faserverstärktem Kunststoff, insbesondere aus Kohlefasern hergestellt sein. Durch die Verwendung von derartigen Materialien können laminare Profile verwendet werden.

Die in Flugrichtung F vordere Tragfläche 3 und die hintere Tragfläche 4 sind in der vorliegenden Ausführungsform vertikal, d.h. in Hochachsenrichtung, beabstandet. Dabei ist die vordere Tragfläche 3 am oberen Teil des Rumpfes 2, quasi in Form eines Hochdeckers angeordnet. Die hintere Tragfläche 4 ist in Form eines Tiefdeckers am unteren Teil des Rumpfes 2 angeordnet. Das Verhältnis der vertikalen Beabstanung h der Tragflächen zu der Beabstandung der Tragflächen 3, 4 in Längsachsenrichtung kann dabei ein Verhältnis von etwa 1:5 aufweisen.

Die Flugantriebe 5, 6 können im vorliegenden ersten Ausführungsbeispiel als konventionelle mit Kerosin betriebene Turboprop-Antriebe ausgebildet sein. Es sind aber auch Brennstoffzellenantriebe, Hybridantriebe und reine Elektroantriebe verwendbar. Da der Geschwindigkeitsbereich für diese Flugzeugkonfiguration bei < Mach 0,6 liegt, kann der spezifische Schub, wie bei Turboprop-Antrieben üblich,in einem niedrigen Bereich gehalten werden. Ferner kann durch die geringe Flügeltiefe und den gewählten Geschwindigkeitsbereich ein laminar umströmtes Flügelprofil verwendet werden.

Da bei der erfindungsgemäßen Flugzeugkonfiguration der Neutralpunkt vor dem Flugzeugschwerpunkt liegt, ist das Flugzeug instabil. Um das Flugzeug in einer stabilen Fluglage zu halten, ist eine elektronische Flugregelung vorgesehen.

Eine zweite vorteilhafte Ausführungsform ist in Figuren 3 und 4 gezeigt. Die zweite Ausführungsform unterscheidet sich von der ersten Ausführungsform lediglich darin, dass hier im Wesentlichen zylindrische Gehäuse 13, 14 links und rechts vom Flugzeugrumpf angeordnet sind, und zwei elektrische Flugantriebe 5, 6 zur Anwendung kommen. Im Übrigen wird auf die Ausführungen zur ersten Ausführungsform Bezug genommen. Die Gehäuse 13, 14 erstrecken sich, wie insbesondere aus der Figur 4 hervorgeht, zwischen der vorderen Tragfläche 3 und der hinteren Tragfläche 4. Dabei sind die Gehäuse 13, 14 an der vorderen Tragfläche 3 an deren Unterseite befestigt. An der hinteren Tragfläche 4 geht das Gehäuse 13, 14 in die Verkleidung des Flugantriebs 5, 6 über und ist wie diese über Pylonen 11, 12 auf der Oberseite der hinteren Tragfläche 4 mit dieser Verbunden. Allerdings kann das Gehäuse auch unterhalb oberhalb oder seitlich von der Verkleidung des Flugantriebs 5, 6 angeordnet sein.

Die Gehäuse 13, 14 weisen dabei eine ausreichende Festigkeit und Steifigkeit auf, um Schwingungen und Flattern zu vermeiden. Andererseits können im Gehäuse 13, 14 untergebrachte Akkumulatoren einfach am Boden mittels von unten zugänglichen und austauschbaren Akkubehälter dem Gehäuse entnommen und wieder zugeführt werden.

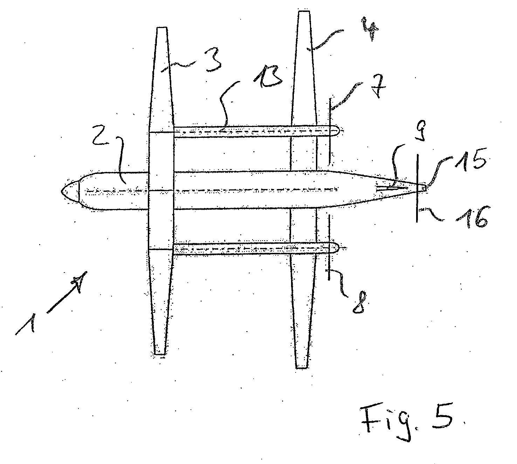

Schließlich zeigt Figur 5 eine dritte vorteilhafte Ausführungsform, die sich von der oben beschriebenen zweiten Ausführungsform dadurch unterscheidet, dass ein dritter Flugantrieb 15 mit einem Propeller 16 am Heck des Rumpfes 2 angeordnet ist. Dabei ist der Antrieb so angeordnet, dass die Propellerwelle am Heckkonus austritt. Durch die Anströmung des ebenfalls mit einem Schubpropeller 16 ausgestatteten zentral im Rumpfheck angeordenten Flugantriebs 15, kann eine Grenzschichtbeschleunigung im Heckbereich des Rumpfes 2 erreicht werden. Dies trägt zusätzlich zur Verbesserung der aerodynamischen Eigenschaften und zur Antriebseffizienz der vorgeschlagenen Flugzeugkonfiguration bei. Im Übrigen wird auf die oben stehenden Ausführungen zur ersten und zweiten Ausführungsform Bezug genommen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der in den Patentansprüchen beanspruchten Lösung auch bei anders gearteten Ausführungen Gebrauch macht. Ausdrücklich sind alle technisch möglichen Kombinationen der vorgenannten Ausführungsbeispiele miteinander von dieser Offenbarung mit umfasst. So können beispielsweise die Durchmesser der Propeller kleiner ausgestaltet und diese Propeller dann ummantelt sein. Die Tragfläche könnte beispielsweise zusätzlich Winglets an den Flügelenden aufweisen.

Bezugszeichenliste

| 1 | Flugzeug |
|---|---|
| 2 | Rumpf |
| 3 | vordere Tragfläche |
| 4 | hintere Tragfläche |
| 5 | rechtes Triebwerk |
| 6 | linkes Triebwerk |
| 7 | rechter Propeller |
| 8 | linker Propeller |
| 9 | Seitenleitwerk |
| 10 | Finne |
| 11 | rechter Triebwerks-Pylon |
| 12 | linker Triebwerks-Pylon |
| 13 | rechtes Gehäuse |
| 14 | linkes Gehäuse |
| 15 | mittleres Triebwerk |
| 16 | mittlerer Propeller |

**Patentansprüche**

1. Flugzeug (1) mit einer Tandemflügelanordnung und zumindest zwei auf der Oberseite der hinteren Tragfläche (4) angeordneten Flugantrieben (5, 6), **dadurch gekennzeichnet, dass** das Flugzeug (1) einen Einzelrumpf (2) und die Tandemflügelanordnung zwei separate Flügel aufweist, wobei beide Tragflächen (3, 4) als Trapezflügel mit einer Streckung (AR) im Bereich von größer oder gleich 12 und kleiner oder gleich 25 ausgebildet sind.

2. Flugzeug (1) nach Anspruch 1, wobei die beiden Tragflächen (3, 4) der Tandemflügelanordnung in Hochachsenrichtung vertikal beabstandet sind.

3. Flugzeug (1) nach Anspruch 1 oder 2, wobei die vordere Tragfläche (3) an der Rumpfoberseite befestigt ist, während die hintere Tragfläche (4) an der Rumpfunterseite befestigt ist.

**4.** Flugzeug (1) nach einem der vorhergehenden Ansprüche, wobei die hintere Tragflächen (4) eine größere Spannweite als die vordere Tragfläche (3) aufweist.

**5.** Flugzeug (1) nach einem der vorhergehenden Ansprüche, wobei die Auftriebsverteilung zwischen dem Auftrieb der vorderen Tragfläche (3) und dem Auftrieb der hinteren Tragfläche (4) etwa 45:55, vorzugsweise 50:50 beträgt.

**6.** Flugzeug (1) nach einem der vorhergehenden Ansprüche, wobei ein Hybridelektrischer oder ein rein elektrische Flugantrieb (5, 6, 15) vorgesehen ist.

**7.** Flugzeug (1) nach einem der vorhergehenden Ansprüche, wobei die zumindest zwei Flugantriebe (5, 6) auf Pylonen (11, 12) auf der Tragflächenoberseite angeordnet sind.

**8.** Flugzeug (1) nach einem der vorhergehenden Ansprüche, wobei am Heck des Flugzeugrumpfes (2) ein weiterer Flugantrieb (15) vorgesehen ist.

**9.** Flugzeug (1) nach einem der vorhergehenden Ansprüche, wobei als Flugantrieb (5, 6, 15) ein Propellerantrieb vorgesehen ist.

**10.** Flugzeug (1) nach Anspruch 9, wobei der Propellerantrieb Schubpropeller (7, 8, 16) aufweist.

**11.** Flugzeug (1) nach einem der vorhergehenden Ansprüche, wobei sich zwischen den beiden Tragflächen (3, 4) erstreckende Gehäuseröhren (13, 14) vorgesehen sind.

**12.** Flugzeug (1) nach Anspruch 7 und 11, wobei die Gehäuseröhren (13, 14) an der Unterseite der vorderen Tragfläche (3) und über die Pylonen (11, 12) mit der hinteren Tragfläche (4) verbunden sind.

**13.** Flugzeug (1) nach einem der vorhergehenden Ansprüche, wobei das Flugzeug (1) mit einer instabilen Neutralpunktlage ausgelegt ist.

**14.** Flugzeug (1) nach Anspruch 13, wobei eine Flugregelungseinrichtung vorgesehen ist, um eine künstliche Stabilität zu erzeugen.

**15.** Flugzeug (1) nach einem der vorhergehenden Ansprüche, wobei das Flugzeug als bemanntes Passagier- oder Frachtflugzeug ausgebildet ist.

**Claims**

**1.** Aircraft (1), having a tandem wing arrangement and at least two aero engines (5, 6) disposed on the upper face of the rear wing (4), **characterized in that** the aircraft (1) has a single fuselage (2) and the tandem wing arrangement comprises two separate wings, wherein both wings (3, 4) are constructed as trapezoidal wings having an aspect ratio (AR) in the range of greater or equal 12 and less or equal 25.

**2.** Aircraft (1) according to Claim 1, wherein the two wings (3, 4) of the tandem wing arrangement are vertically spaced apart in the yaw axis direction.

**3.** Aircraft (1) according to Claim 1 or 2, wherein the front wing is fastened to the top of the fuselage, whereas the rear wing is fastened to the underside of the fuselage.

**4.** Aircraft (1) according to one of the preceding claims, wherein the rear wings (4) have a greater span than the front wing (3).

**5.** Aircraft (1) according to one of the preceding claims, wherein the lift distribution between the lift of the front wing (3) and the lift of the rear wing (4) is approximately 45:55, preferably 50:50.

**6.** Aircraft (1) according to one of the preceding claims, wherein a hybrid electric or purely electric aero engine (5, 6, 15) is provided.

**7.** Aircraft (1) according to one of the preceding claims, wherein the at least two aero engines (5, 6) are disposed on pylons (11, 12) on the upper surface of the wing.

**8.** Aircraft (1) according to one of the preceding claims, wherein a further aero engine (15) is provided at the rear of the aircraft fuselage (2).

**9.** Aircraft (1) according to one of the preceding claims, wherein a propeller engine is provided as aero engine (5, 6, 15).

**10.** Aircraft (1) according to Claim 9, wherein the propeller engine comprises thrust propellers (7, 8, 16).

**11.** Aircraft (1) according to one of the preceding claims, wherein housing tubes (13, 14) are provided which extend between the two wings (3, 4).

**12.** Aircraft according to Claims 7 and 11, wherein the housing tubes (13, 14) are fastened to the underside of the front wing (3) and via the pylons (11, 12) connected to the rear wing (4).

**13.** Aircraft (1) according to one of the preceding claims, wherein the aircraft (1) is designed to have an unstable aerodynamic center position.

**14.** Aircraft (1) according to Claim 13, wherein a flight controller is provided in order to generate artificial stability.

**15.** Aircraft (1) according to one of the proceeding claims, wherein the aircraft is a manned passenger or cargo aircraft.

**Revendications**

**1.** Avion (1) présentant une configuration d'ailes en tandem et au moins deux groupes propulseurs (5,6) placés sur la face supérieure de la voilure arrière (4), **caractérisé en ce que**
l'avion (1) présente un fuselage unique (2) et que la configuration d'ailes en tandem présente deux ailes séparées, les deux voilures (3, 4) présentant la forme d'un trapèze avec un allongement (AR) compris dans la fourchette supérieur ou égal à 12 et inférieur ou égal à 25.

**2.** Avion (1) selon la Revendication 1, dans lequel les voilures (3, 4) de la configuration d'ailes en tandem se situent à des niveaux différents sur un axe vertical.

**3.** Avion (1) selon la Revendication 1 ou 2 dans lequel la voilure avant (3) est fixée sur la partie supérieure du fuselage, tandis que la voilure arrière (4) est fixée sur la partie inférieure du fuselage.

**4.** Avion (1) selon l'une quelconque des revendications précédentes dans lequel la voilure arrière (4) présentent une plus grande envergure que la voilure avant (3).

**5.** Avion (1) selon l'une quelconque des revendications précédentes dans lequel la répartition de la portance entre la portance de la voilure avant (3) et de la portance de la voilure arrière est d'environ 45:55, de préférence 50:50.

**6.** Avion (1) selon l'une quelconque des revendications précédentes doté d'un groupe propulseur électrique hybride ou exclusivement électrique (5, 6, 15).

**7.** Avion (1) selon l'une quelconque des revendications précédentes dans lequel les deux groupes propulseurs (5, 6) au moins sont positionnés sur des pylônes (11,12) sur la face supérieure des voilures.

**8.** Avion (1) selon l'une quelconque des revendications précédentes dans lequel un groupe propulseur supplémentaire (15) est prévu dans la queue du fuselage (2).

**9.** Avion (1) selon l'une quelconque des revendications précédentes dans lequel le groupe propulseur (5, 6, 15) est un moteur à hélice.

**10.** Avion (1) selon la Revendication 9 dans lequel le moteur à hélice présente des hélices propulsives (7, 8, 16).

**11.** Avion (1) selon l'une quelconque des revendications précédentes dans lequel des tubes (13, 14) relient les deux voilures (3, 4).

**12.** Avion (1) selon les Revendications 8 et 11, dans lequel les tubes (13, 14) relient la face inférieure de la voilure avant (3), au-dessus des pylônes, (11, 12) et la voilure arrière (4).

**13.** Avion (1) selon l'une quelconque des revendications précédentes, l'avion (1) étant doté d'un centre de poussée instable.

**14.** Avion (1) selon la Revendication 13 dans lequel un dispositif de contrôle de vol est prévu afin de générer une stabilité artificielle.

**15.** Avion (1) selon l'une quelconque des revendications précédentes, l'avion (1) étant configuré comme avion de transport de passager ou de fret.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130264428 A1
- US 20060151666 A1
- US 20080001025 A1
- US 2011180660 A1
- FR 510306
- FR 682950
- US 4165058 A
- US 20100044521 A1